# EUROPEAN PATENT APPLICATION

(11) **EP 1 803 693 A1**
(43) Date of publication of application: **04.07.2007**
(21) Application number: 04809010.4
(22) Date of filing: 24.12.2004
(51) Int. Cl.: C03C 11/00, C03B 19/08

(54) **METHOD FOR PRODUCING CALIBRATED GRANULATED FOAM GLASS**

(30) Priority: 20.10.2004 RU 2004130597
(71) Applicant: Zinoviev, Andrei Adolfovich, Vladimir, 600017 (RU); Dudko, Mikhail Petrovich, Moscow, 117292 (RU); Leonidov, Valentin Zinovievich, Moscow, 117335 (RU)
(72) Inventor: Zinoviev, Andrei Adolfovich, Vladimir, 600017 (RU); Dudko, Mikhail Petrovich, Moscow, 117292 (RU); Leonidov, Valentin Zinovievich, Moscow, 117335 (RU)
(74) Representative: Winkler, Andreas Fritz Ernst
(86) International application number: PCT/RU2004/000519
(87) International publication number: WO 2006/043849

(57) **Abstract**

The present invention relates to the production of construction materials with low conductivity and density characteristics, particularly to the production of calibrated granular foamed glass from unscreened cullet irrespective of its chemical composition, which makes it possible to reproducingly obtain foamed glass with granules having a shape close to globular and a prescribed size. The method is **characterized by** low labor and power inputs. This is achieved by using, when preparing the feedstock mixture, an aqueous alkaline solution of sodium silicate and/or potassium silicate in an amount of at least 30 to 70 weight % and powdered cullet having an arbitrary chemical composition in an amount within the range of 25 to 65 weight %. From the feedstock mixture subjected to heat treatment to the dehydrated state a powdered batch and an aqueous dispersion of this batch in the presence of plasticizers are prepared. The obtained product is dried at a temperature of from 450 to 500°C, palletized and maintained at the foaming temperature within a range of from 800 to 850°C.

## Description

### BACKGROUND OF THE INVENTION

### Field of the Invention

The present invention relates to the production of construction materials with low conductivity and density characteristics, particularly to the production of calibrated granular foamed glass from processed cullet irrespective of its chemical composition.

### Description of the Prior Art

Foamed glass can be produced by many methods, using compositions based on various kinds of glass and foaming agents. Glass powder is produced either from specially prepared glass melts or from cullet of pane glass, container glass, optical glass, and other glasses.

Conventional technology of producing foamed glass comprises melting glass having a special composition, grinding this glass with a foaming agent for preparing a finely dispersed batch, foaming the formed batch in the course of annealing at a temperature of at least 700°C (US 4192664, Cl. C03B 19/00, 1980, US 3403990, Cl. 65-22, 1968). The use of the known technology makes it possible to produce foamed glass of sufficiently high quality with a homogeneous structure providing its operational stability, but such foamed glass has a high prime cost, because the operation of producing foamed glass having a required composition is highly labor-intensive.

In US 4198224, Cl. C03B 19/08, 1980 a multi-step process for producing foamed glass from cullet is disclosed, which comprises heating a powdered batch to a foaming temperature, maintaining thereof at this temperature till completion of the foaming process, and subsequent cooling. The foamed glass manufactured by Pittsburg Coming Corporation is produced from a finely dispersed glass powder subject to utilization and a foaming agent. Glass having a strictly definite composition and a foaming agent, both in a solid phase, are ground separately and intermixed in a ball mill. The resulting powdered mixture is then sintered in two steps at a temperature below the foaming temperature and then cooled. The known process is complicated, since it requires intermixing the starting components in the solid-phase state, which does not ensure their high level of distribution homogeneity in the mixture volume. Besides, grinding in ball mills with metallic balls leads to the contamination of the mixture with the metal of the balls and lining, which disturbs the pore formation conditions in the step of foamed glass production. Unfortunately, under the conditions of price hike for energy carriers, the use of the known powdered batch and of the process for preparing thereof leads to the rise in the cost of foamed glass. This situation imposes limitations on the choice of the composition subject to foaming.

WO 00/61512, Cl. C03C 11/00, 2000 discloses a method for producing granular foamed glass with the use of glass wastes, wherein the granulate undergoes one- or two-step treatment at a temperature of from 200 to 300°C or from 400 to 800°C for a period of time not longer than 15 minutes.

Liquid glass is known as an additive in the production of granular foamed glass, necessary as a binder for granules (see, e.g., DE 2010263, C03C 11/00, 1979). RU 2162825, Cl. C03C 11/00, 2001 discloses a method of producing cellular glass from graded cullet having a definite composition, comprising preparing a batch by combined grinding the cullet and a carbonate foaming agent, granulating the batch with sprinkling thereof with an aqueous solution of soluble glass.

Known from RU 2109700, Cl. C03C 11/00, 1998 is a technology for manufacturing granular foamed glass from a feedstock mixture containing 53.22 to 71.26 weight % of glass wastes, a gas-forming agent, and a binder. Foamed glass is produced by grinding glass and the gas-forming agent, two-step granulation on a movable surface of a granulator with supplying simultaneously the binder, and subsequent annealing. The granulation step comprises a preliminary process of formation of so-called nucleating granules from a mixture of triplex wastes and the gas-forming agent and subsequent granulation of the obtained nucleating granules simultaneously with the foam-forming mixture containing ground triplex and the gas-forming agent. The granulation is carried out in the mode of a prescribed ratio of the diameters of the nucleating and resulting feedstock granules. The known method does not allow producing calibrated granular foamed glass, i.e., foamed glass with prescribed uniformly sized and shaped granules. The method is poorly reproducible, because its realizability is associated with the manageability of the difficult-to-control maintenance of the ratio of the diameters of the nucleating and resulting granules.

One of the methods of interest for producing granular foamed glass is the method according to RU 216825. The known method comprises crushing cullet, washing and drying thereof at a temperature of110 to 120°C, weight batching and joint crushing of the cullet and a porogene, granulating the batch on a plate granulator with spraying the batch with an aqueous solution of soluble glass, drying the granules on a net drier at a temperature of 400°C to the 2% humidity, foaming the granules in a rotary furnace with river quartz sand as the separating medium at a temperature of 780 to 820°C and separating the granules from the separating medium. The known method makes it possible to simplify the method of producing granular foamed glass and to lower the consumption of electric power, however, it does not enable obtaining uniformly sized and shaped granules of foamed glass in a lot. A serious limitation of the known method is a significant number of cracked granules, as well as low reproducibility of the method and high bulk density of the product, amounting to 200 to 300 kg/m³ due to the use of moist feedstock mixture.

RU 2187473, Cl. C03B 19/08, 2000 discloses a method of producing granular foamed glass, comprising preliminary heat treatment at a temperature below the foaming temperature of a feedstock mixture prepared from a finely dispersed cullet powder, a carbon-containing component and sodium silicate, heating the mixture to the foaming temperature, maintaining at this temperature till the expansion process is completed, followed by cooling. In the known method the dispersed cullet based on alkali aluminosilicates vitreous wastes is intermixed with the expanding mixture containing silica, a carbon-containing component, a metal sulfate and liquid sodium glass in an amount of from 0.5 to 5.0 weight %. Liquid glass is used either in dry state or in the water-wetted state for improving the aggregation of material into granules. The granular material is loaded into metallic molds and transferred into a furnace for caking. The granular foamed glass produced in accordance with the known technology is characterized by high prime cost associated with the necessity of prolonged and sufficiently complicated mechanical intermixing of the components to a very uniform distribution of the foaming agent particles in the glass powder. Besides, grinding in ball mills with metallic balls leads to the contamination of the batch with the metal of the balls and lining, which later on disturbs the pore formation conditions in the batch subjected to caking. The operating conditions of the known method were developed for a particular composition of cullet, and this makes them inapplicable if cullet of an arbitrary composition is used. By the known method calibrated granular foamed glass, i.e., foamed glass with prescribed uniformly sized and shaped granules cannot be produced. The method is poorly reproducible, because its application does not allow obtaining a uniform initial size of non-foamed granules.

### Summary of the Invention

Within the framework of the present Application it is an object of the invention to provide a technology of producing calibrated granular foamed glass, which will make it possible to reproducingly obtain granules having a shape close to globular and a prescribed size. There is also need to broaden the source of stock materials and provide such technology which will allow producing foamed glass uniform in terms of the physicochemical structure, size and shape of granules, irrespective of the chemical composition of cullet, i.e., from ungraded cullet. There is a need to provide a technology with small energy intensity of the production process. Another object is to enhance the reproducibility of the foamed glass structure with a homogeneous fine-pored texture containing closed pores.

The posed problem is solved by that the method of producing calibrated granular foamed glass comprises intermixing at a temperature not higher than 70°C an aqueous alkaline solution of sodium silicate and/or potassium silicate, powdered cullet and a carbon-containing component, heat treating the viscous-flow mixture obtained in the intermixing at a temperature of from 450 to 550°C till a dehydrated composition is obtained, subsequent reducing the cooled composition to powder, and preparing an aqueous dispersion of the powder with plasticizer additives, drying the dispersion at a temperature of from 450 to 550°C, pelletizing the resulting dried product and heating thereof to a foaming temperature within a range of 800 to 850°C, maintaining the palletized product at the foaming temperature and cooling thereof to the ambient temperature.

It is expedient to intermix the starting ingredients in the following ratio, in weight %:

| | |
|---|---|
| aqueous alkaline solution of sodium silicate and/or potassium silicate | 30-70 |
| powdered ungraded cullet | 25-65 |
| carbonaceous foaming agent | 4-9 |

It is preferable to prepare the aqueous dispersion with the water content of 70 to 75 weight %.

Besides, it is expedient to carry out cooling of the palletized product from the foaming temperature with a rate of 0.5 to 1.0 deg/min.

Since ungraded cullet, i.e., artificial technical glasses, are systems comprising different oxides, the process of the reaction of an aqueous solution of an alkali metal with ungraded cullet required studying its thermodynamic conditions. Sodium silicate and/or potassium silicate dissolved in water to a definite concentration is an alkaline solution required for the course of physicochemical processes accompanying its reaction with the cullet oxides irrespective of their composition, including alkali oxides contained in the glass.

The essence of the invention is in establishing the cause-and-effect relation between the physicochemical properties of calibrated granular foamed glass, the thermodynamic conditions of preparing the feedstock mixture, the aqueous dispersion from the powder of the cooled mixture and the plasticizer, and subsequent palletizing of the product of drying this dispersion and the temperature conditions of foaming. In the absence of generally known regularities of the physicochemical state of the substance after its treatment at a foaming temperature in the form of pellets and the starting composition of the ingredients in preparing the feedstock mixture, the authors have found those optimal sequences of the process operations and the content of the aqueous alkaline solution of sodium silicate in the starting mixture, which make it possible in subsequent treatment at a temperature from the range of 450 to 550°C to obtain the required parameters of calibrated granular foamed glass. In the absence of a rigorous theory of viscosity of disperse systems, the cited regularities of preparing the feedstock mixture were established by the authors empirically.

In the present method of producing calibrated granular foamed glass the intermixing of the alkali metal silicate, the powder of technical glass having an arbitrary composition and the carbon-containing foaming agent is carried out not in the solid state, but in an aqueous solution of an alkali metal silicate, which comprises a viscous-flow liquid with the medium pH > 7 and is such a component which provides both uniform distribution of the powdered additives within the batch volume and the course of the necessary physicochemical processes. Heating the feedstock mixture to a temperature from 450 to 550°C is carried out for dehydrating it and removing chemically bound water.. The intermixing of the starting components of the mixture in the liquid phase state without preliminary heating at a temperature not higher than 70°C makes it possible to obtain later on a structure of homogeneous closed gas-filled pores, uniform throughout the volume of foamed glass by a low power-intensity of the production process, irrespective of the chemical composition of technical glass.

The present method makes it possible to produce granular foamed glass in the form of porous granules having a prescribed size (calibrated) and shaped as globules of 7 to 40 mm in diameter, noted for a high mechanical strength. If required, the indicated size of globular granules can be increased.

The outer surface of each granule of the foamed glass produced by the present method is covered with a protective layer which can be made of various materials, such as different fractions of quartz sand, cement. This layer imparts additional chemical and thermal stability properties to the granular foamed glass and also provides better adhesion of the foamed glass to various binding materials when using foamed glass as a filler in various products, e.g., in cement grout, concrete.

The calibrated granular foamed glass produced by the present method possesses all the thermal and physical-and-mechanical properties of block foamed glass, surpassing the latter by 10 to 15% in the thermal conductance at appropriate "strength/bulk weight" ratios.

For a better understanding of the essence of the present invention, given below is a non-limiting example illustrating the method of producing calibrated granular foamed glass.

The feedstock mixture is prepared from the following components. The starting component is 150 kg of a commercially available aqueous alkaline solution of sodium silicate and potassium silicate (optimal ratio 1:1) produced at Ryazan Works from tripoli by an autocvlave or non-autoclave hydrothermal leaching of silica in an alkaline medium (pH > 7) at a temperature of 90 to 100°C. An aqueous solution of sodium silicate and potassium silicate (optimal ratio 1: 1) at an ambient temperature is first intermixed for 10 to 15 minutes with finely ground powder of ungraded cullet of different brands and chemical composition, taken in an amount of 65 kg. To the obtained viscous-flow composition 20 kg of a carbon-containing foaming agent are added. In the course of intermixing the composition there takes place binding of free water and alkali which adversely affect the water solubility of the final product - foamed glass. The resulting mixture is gray colored. After intermixing all the components of the feedstock mixture, the resulting mixture is heat treated at a temperature of 520°C for about 65 minutes. During the heat treatment there take place further physicochemical processes accompanied by the removal of free hydration water and chemically bound water and by an increase of the viscosity of the mixture, whereafter the color of the mixture becomes dark gray. The weight of the feedstock mixture cooled to the ambient temperature is about 60% of the weight of the starting components. Then the mixture is ground to a grain size not larger than 15 to 20 µm and an aqueous dispersion of the mixture with plasticizer additives is prepared. The content of water in the dispersion is 72 weight %. The obtained dispersion is treated in a vertical drying and granulating installation at the temperature of 470°C, where this dispersion becomes converted into a dehydrated mass in the form of so-called "microgrits". The resulting product of drying is palletized to obtain pellets of 10 to 12 mm in diameter. These pellets are supplied to a rotary furnace, wherein the foaming temperature of 830°C is maintained. After cooling down from the foaming temperature with the rate of 0.6 deg/min, calibrated granular foamed glass is obtained at the furnace outlet, the shape of the granules being close to globular and the glass possessing all the properties of high-quality heat-insulating foamed glass.

The results of comparative tests of block foamed glass and of calibrated granular foamed glass produced by the present technology are listed in Table 1.

**Table 1**

| Characteristics | Block foamed glass | Calibrated granular foamed glass |
|---|---|---|
| Density, kg/m³ | 140-250 | 70-250 |
| Thermal conductance, W/m K | 0.06±10% | 0.045±0.055 |
| Fire-hazard classification | Does not burn | Does not burn |
| Hygroscopicity, weight % | 0.3-0.7 | 0.1-0.2 |
| Water absorption, % | 2-6 | 1-3 |
| Working range of temperatures, °C | -220 to +500 | -220 to +650 |
| Pore structure | Gas-filled, closed | Gas-filled, closed |
| Ecological compatibility | Ecologically safe | Ecologically safe |

### Industrial Applicability

The method of the present invention makes it possible to produce calibrated granular foamed glass with granules having a shape close to globular, reproducible size with fine-pored texture from cullet having an arbitrary chemical composition. The production of calibrated granular foamed glass with globular granules allows maximum filling of any thermally insulated volume of a structure, which markedly improves its heat engineering and service properties, and essentially lowers the specific consumption of cement or other binding material in manufacturing concrete and/or reinforced concrete articles and structures.

The invention contemplates the use of an aqueous alkaline solution of sodium silicate and/or potassium silicate and additives chemically active with respect thereto, one of said additives being powdered cullet having an arbitrary chemical composition, which make it possible after intermixing thereof with a carbon-containing foaming agent and heat treatment at a temperature of 450 to 550°C to obtain a dehydrated composition suitable for producing calibrated granular foamed glass with high thermophysical characteristics but with low energy intensity of the production process owing to ruling out melting glass having a special chemical composition at high temperatures.

## Claims

1. A method for producing calibrated granulated foamed glass, comprising intermixing at a temperature not higher than 70°C an aqueous alkaline solution of sodium silicate and/or potassium silicate, powdered cullet and a carbon-containing gas-forming agent, heat treatment of the viscous-flow mixture obtained in the intermixing at a temperature within a range of from 450 to 550°C till a dehydrated composition is obtained, followed by reducing the cooled composition to powder and preparing an aqueous suspension of the powder with plasticizer additives, drying the aqueous suspension at a temperature within the range of from 450 to 500°C, palletizing the obtained product of drying, and heating to a foaming temperature within the range of from 800 to 850°C, maintaining the palletized product at the foaming temperature and cooling to the ambient temperature.

2. A method according to claim 1, wherein the ingredients in the intermixing are selected from the ratio, in weight %:
| | |
|---|---|
| aqueous alkaline solution of sodium silicate and/or potassium silicate | 30-70 |
| powdered ungraded cullet | 25-65 |
| carbonaceous foaming agent | 4-9 |

3. A method according to claim 1, wherein the aqueous dispersion is prepared with a water content of 70 to 75 weight %.

4. A method according to claim 1, **characterized in that** cooling the palletized product from the foaming temperature is carried out with the rate of 0.5 to 1.0 deg/min.
